# DEMANDE DE BREVET EUROPEEN

(11) **EP 0 890 380 A1**
(43) Date de publication de la demande: **13.01.1999**
(21) Numéro de dépôt: 97420108.9
(22) Date de dépôt: 07.07.1997
(51) Int. Cl.: B01D 1/22, B01D 1/26, B01D 1/00

(54) **Procédé de retraitement de solvants usagés et installation pour la mise en oeuvre de ce procédé**

(71) Demandeur: Société de Regeneration-Sorege, 39190 Beaufort (FR)
(72) Inventeur: Gotti, Jean-Marie, 39570 Montmorot (FR); Prendleloup, Michel, 01000 Bourg En Bresse (FR); Sechehaye, Vincent, 70000 Vesoul (FR)
(74) Mandataire: Vuillermoz, Bruno

(57) **Abrégé**

Procédé de retraitement de solvants usagés dans lequel:
- le solvant usagé est chauffé jusqu'à évaporation dans une enceinte (1,2),
- puis la vapeur ainsi dégagée, constituée par le solvant pur ou quasiment pur, est condensée (10) et récupérée,
*caractérisé*:
- en ce que le solvant usagé est filtré (7,8), le filtrat ainsi obtenu étant réintroduit dans ladite enceinte d'évaporation (1,2),
- et en ce que la paroi latérale de ladite enceinte subit un râclage permanent, afin de limiter et/ou d'annuler le dépôt de toute particule solide à ce niveau.

## Description

L'invention concerne un procédé de retraitement de solvants usagés, notamment vernis, peintures, produits de nettoyage, etc... ; elle concerne également une installation pour la mise en oeuvre de ce procédé.

Le traitement des solvants usagés est actuellement réalisé selon deux méthodes.

Une première méthode consiste à incinérer les solvants usagés dans des centres d'incinération spécialement équipés. Ce procédé présente un certain nombre d'inconvénients. En effet, outre le coût élevé de l'installation, l'incinération des solvants engendre une pollution, aussi bien thermique que chimique, très importante. Par ailleurs et surtout, le solvant est détruit et ne peut être réutilisé.

Une seconde méthode consiste à retraiter les solvants usagés de manière à pouvoir les réutiliser. Le retraitement est effectué par évaporation du solvant. Pour ce faire, le solvant usagé est chauffé jusqu'à évaporation, et les vapeurs dégagées, constituées par le solvant pur ou quasiment pur, sont ensuite condensées puis stockées. Cependant, on observe qu'au contact des parois chaudes de l'enceinte d'évaporation, le solvant se polymérise, les polymères générés adhérant sur ces mêmes parois. On assiste ainsi à une diminution de l'efficacité de l'évaporation inhérente à la formation d'une couche intermédiaire constituée par les polymères. Pour pallier cet inconvénient majeur, on soumet le contenu de l'évaporateur à agitation, celle-ci étant effectuée au moyen d'un agitateur muni d'un axe central rotatif, animé d'une vitesse de l'ordre de 500 tours/minute, sur lequel sont articulées des aubes métalliques. La force centrifuge exercée sur les aubes pendant la rotation, permet de plaquer celles-ci contre les parois de l'enceinte d'évaporation et partant, de râcler les polymères. Néanmoins, le contact insuffisant entre les parois de l'enceinte et l'extrémité libre des aubes ne permet pas de râcler de manière efficace les polymères. On observe alors une diminution progressive du rendement jusqu'à un colmatage complet de l'installation, due à l'accumulation d'extraits secs dans l'enceinte d'évaporation et ce, en quelques heures seulement. Par ailleurs, la vitesse élevée de rotation de l'agitateur interdit l'usage d'un évaporateur de grande taille.

Le but de l'invention est donc de proposer un procédé permettant de retraiter le solvant de façon à pouvoir le réutiliser, ne présentant pas les inconvénients décrits ci-dessus.

L'invention a donc pour objet un procédé de retraitement de solvants usagés dans lequel :
- le solvant usagé est chauffé jusqu'à évoporation dans une enceinte,
- puis la vapeur ainsi dégagée, constituée par le solvant pur ou quasiment pur, est condensée et récupérée.

Ce procédé se caractérise :
- en ce que le solvant usagé est filtré, le filtrat ainsi obtenu étant réintroduit dans ladite enceinte d'évaporation,
- et en ce que la paroi latérale de ladite enceinte subit un râclage permanent, afin de limiter et/ou d'annuler le dépôt de toute particule solide à ce niveau.

En d'autres termes, le solvant usagé ayant atteint la température d'ébullition s'évapore progressivement, puis est condensé. Alors même qu'un certain volume de solvant est ainsi évaporé, le solvant usagé restant, constitué en partie d'une proportion importante d'extraits secs (pouvant atteindre 15 % en poids) est filtré, puis réintroduit dans l'enceinte d'évaporation initiale. Dans le même temps, le solvant qui se polymérise au contact de la paroi latérale chaude de l'enceinte d'évaporation est raclé en permanence, tombant ainsi dans le fond de l'enceinte pour être conduit ensuite jusqu'au moyen de filtration. Au fur et à mesure de leur apparition à la surface de la paroi, les polymères sont donc éliminés, améliorant ainsi la qualité du transfert thermique et partant, une augmentation du débit des vapeurs formées.

Pour augmenter le rendement du procédé, le filtrat est réintroduit dans la zone supérieure de l'enceinte, de telle sorte à arroser sa paroi latérale, entraînant ainsi un ruissellement dudit filtrat le long de ladite paroi, et créant un effet de couche mince, favorisant l'ébullition.

Avantageusement, le filtrat est réintroduit dans la zone supérieure de l'enceinte par rotation, permettant ainsi un arrosage uniforme de la paroi latérale.

L'invention concerne également une installation pour le retraitement de solvants usagés comportant au moins un évaporateur destiné à recevoir d'une part le solvant usagé à retraiter, et d'autre part à l'élever en température jusqu'à évaporation, ledit évaporateur étant relié à une cuve d'alimentation en solvant usagé, et à un condenseur au niveau duquel lesdites vapeurs, constituées du solvant pur ou quasiment pur, sont condensées pour être ensuite stockées.

Ce dispositif se caractérise :
- en ce que l'évaporateur est relié à au moins un filtre, destiné à débarrasser le solvant usagé de ses particules solides, le filtrat obtenu étant réintroduit dans l'évaporateur en boucle fermée ;
- et en ce que l'évaporateur comporte au moins un organe de râclage rotatif en appui permanent contre la paroi latérale dudit évaporateur.

Selon ce dispositif, l'évaporateur peut être alimenté dans sa partie haute par le solvant usagé, lequel est chauffé sous agitation jusqu'à évaporation d'une partie de celui-ci, tandis que l'autre partie est filtrée, visant ainsi à éliminer toutes les particules solides contenues dans le solvant usagé et qui, par simple gravité, sont naturellement conduites par une canalisation appropriée au niveau du ou de filtres. Le filtrat est ensuite renvoyé dans l'évaporateur, notamment par pompage.

Comme dejà dit, au contact de la chaleur dégagée par la paroi latérale, une partie du solvant polymérise. Pour supprimer les polymères apparus à la surface de ladite paroi, celles-ci sont soumises à un râclage permanent, entrainant ledits polymères dans le fond de l'évaporateur, lesquels sont ensuite récupérés dans le filtre. Par ailleurs, lorsque les filtres sont saturés, ceux-ci sont démontés, puis nettoyés voire changés.

Dans une autre forme de réalisation, l'alimentation en solvant usagé peut se faire par le bas de l'évaporateur au moyen d'un T. Une des branches du T est destinée à l'alimentation du solvant usagé, tandis que l'autre branche est destinée à l'évacuation du solvant usagé en direction du filtre.

Avantageusement, l'organe de râclage est constitué d'un axe rotatif central, comportant une pluralité de pales sensiblement radiales, lesdites pales étant en contact avec la paroi latérale interne de l'évaporateur, celui-ci étant de section transversale circulaire. L'orientation et la contrainte exercées par les pales au niveau de la paroi de l'évaporateur sont avantageusement réglables, le réglage étant effectué en dehors des périodes de fonctionnement de l'installation. Ce réglage permet non seulement d'effectuer un râclage permanent en traction ou en poussée mais également d'ajuster le contact entre la paroi de l'évaporateur et l'extrémité des pales en fonction de leur usure.

Par "râclage en traction", on entend le fait que les pales de l'organe de râclage sont maintenues contre la paroi de l'évaporateur selon une direction sensiblement parallèle à celle de la vitesse tangentielle de l'arbre rotatif, mais en sens opposé. Par "râclage en poussée", on entend le fait que les pales de l'organe de râclage sont maintenues contre la paroi de l'évaporateur selon une direction sensiblement parallèle à celle de la vitesse tangentielle de l'arbre rotatif, et selon le même sens.

Aussi bien pour permettre un râclage en traction ou en poussée que pour maintenir le contact entre la paroi de l'évaporateur et l'extrémité des pales, le réglage de l'orientation et de la contrainte des pales est effectué par un tendeur à vis, ou tout système équivalent, dont l'une des extrémités est solidaire de l'arbre central rotatif.

De même, pour que le râclage soit plus efficace, chacune des pales est constituée d'un support sur lequel est monté une lame en acier inox, dont l'extrémité venant au contact de la paroi de l'évaporateur est formée d'acier bleui. Sous l'effet de la pression exercée par le tendeur au niveau du support, l'extrémité en acier bleui rigide de la lame est plaquée par cintrage contre la paroi latérale de l'évaporateur. Ainsi, l'angle aigu formé entre la lame et la paroi permet, lors de la rotation de l'organe de râclage, de racler la paroi avec efficacité, sans risque de bloquer la pale sur une aspérité, et d'engendrer par la même une détérioration de l'organe de râclage.

Avantageusement, la vitesse de rotation de l'organe de râclage est comprise entre 5 et 100 tours/minute. Cette faible vitesse de rotation permet d'utiliser des évaporateurs de grande taille, ce qui était impossible jusqu'alors. Par ailleurs, on réalise non seulement une économie substantielle en termes d'énergie, le fonctionnement de l'installation nécessitant une puissance beaucoup moins importante, mais également en termes de coûts, la technologie de mise en oeuvre étant moins pointue et les phénomènes d'usure des pales retardés. Pour finir, cette faible vitesse de rotation confère à l'installation une sécurité et une fiabilité optimale.

Dans une forme avantageuse de réalisation, le filtrat est réintroduit dans la zone supérieure de l'évaporateur, directement dans un réceptacle muni de goulottes radiales, dont l'extrémité libre est voisine de la paroi latérale de l'évaporateur, pour permettre l'arrosage de celle-ci, afin de créer à ce niveau le ruissellement dudit filtrat pour aboutir à génerer un effet de couche mince.

Avantageusement, l'évaporateur est muni de hublots au niveau de son couvercle supérieur, permettant ainsi un contrôle visuel du bon déroulement des opérations.

De même, l'évacuation des vapeurs de solvant s'effectue par l'intermédiaire d'une canalisation partant dudit couvercle, cette canalisation en forme de U, présentant une première partie relativement importante, c'est à dire relativement haute, afin d'éviter tout phénomène de moussage provoqué par l'ébullition des solvants.

Enfin, aussi bien pour des motifs de sécurité que pour faciliter l'évaporation du solvant, l'installation conforme à l'invention est mise en dépression.

En résumé, le dispositif pour la mise en oeuvre du procédé est original en ce qu'il comporte ensemble ou séparément :
- un système de filtration permettant d'épurer le solvant;
- un organe de râclage spécifique, destiné à éliminer au fur et à mesure de leur apparition les polymères,
- un organe spécifique d'arrosage de la paroi latérale de l'évaporateur par le solvant filtré, permettant d'augmenter le rendement de l'évaporation.

Ce système en boucle peut être mis en oeuvre en continu ou non. Il permet ainsi d'obtenir après condensation un solvant pur, exempt de toutes particules solides.

La manière de réaliser l'invention et les avantages qui en découlent ressortiront mieux de l'exemple de réalisation qui suit, donné à titre indicatif et non limitatif, à l'appui de figures annexées.
La figure 1 est un synoptique général du procédé selon l'invention.
La figure 2 est une représentation shématique de l'évaporateur de l'invention.
La figure 3 est un schéma simplifié du dispositif d'arrosage selon l'invention.
La figure 4 est une vue de dessus du dispositif d'arrosage de la figure 3.
La figure 5 est une vue de dessus de l'organe de râclage selon l'invention.
La figure 6 est représentation schématique en perspective de l'organe de râclage selon la figure précédente.

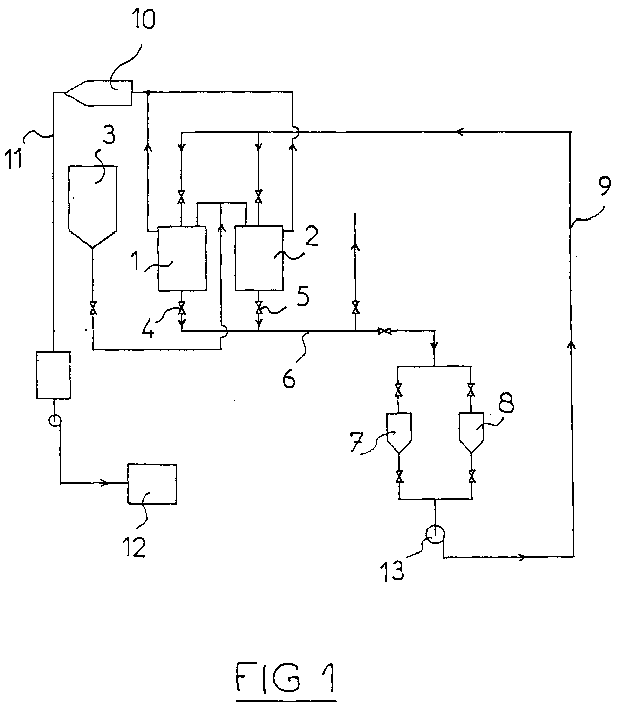

L'installation pour le retraitement des solvants usagés (figure 1) comprend deux évaporateurs (1, 2) à la partie supérieure desquels débouche une canalisation en provenance d'une cuve d'alimentation en solvant usagé (3). Les deux évaporateurs presentent dans leur partie inférieure, deux vannes (4, 5) de sortie, débouchant sur une conduite (6), reliée à deux filtres (7, 8). Les deux filtres (7, 8) sont eux-mêmes reliés par une boucle (9) à la partie supérieure de chacun des deux évaporateurs. Par ailleurs, ces évaporateurs sont reliés à un condenseur (10), lequel est muni d'une conduite (11), débouchant dans une cuve de stockage (12), destinée à récupérer les solvants propres.

En pratique, l'installation est préalablement mise en dépression et le solvant stocké dans la cuve d'alimentation à température ambiante, est pompé puis envoyé dans les évaporateurs (1, 2). Le solvant est alors chauffé, sous agitation, jusqu'à évaporation. La vapeur dégagée est ensuite condensée dans le condenseur tubulaire (10), lequel est refroidi par une circulation d'eau, puis le condensat est récupéré dans une cuve de stockage (12). Par ailleurs, le volume de solvant n'ayant pas atteint la température d'évaporation, et contenant un certain pourcentage de particules solides, est filtré au moyen de filtres (7, 8), le filtrat obtenu étant renvoyé aux évaporateurs (1, 2) par la boucle de recirculation (9) au moyen de pompes (13). Les filtres utilisés sont des filtres à panier bien connus en soi. Lorsque le panier est saturé, on le retire pour le nettoyer, ou le changer.

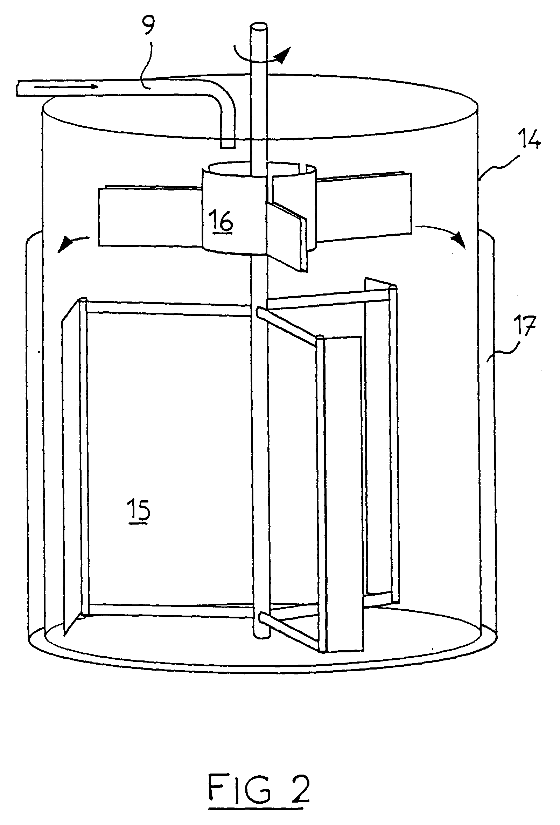

La figure 2 est une représentation schématique de l'évaporateur (14) muni à la fois d'un organe de râclage (15) et d'un système d'arrosage (16). Sur ce schéma, on a représenté uniquement l'arrivée de la boucle de recirculation (9), laquelle débouche dans la partie supérieure de l'évaporateur. Cet évaporateur est muni d'une double paroi dans laquelle circule un fluide caloporteur, par exemple une huile de silicone chauffée à une tempéraure de 250°C, permettant ainsi d'élever la température du solvant à sa température d'évaporation.

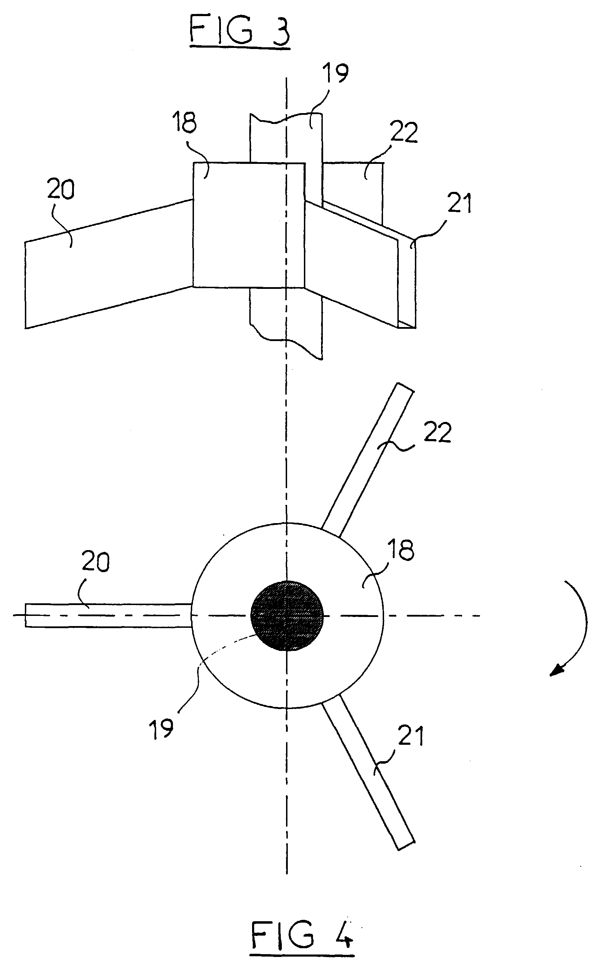

Le système d'arrosage comporte un réceptacle (18) fixé sur un axe central rotatif (19) comportant des goulottes radiales (20, 21, 22) (figures 3 et 4). En pratique, le réceptacle en rotation (18) reçoit le solvant issu de la boucle d'arrosage, puis répartit ce solvant uniformément le long de la paroi latérale de l'évaporateur par l'intermédiaire de chacune des goulottes (20, 21, 22). De la sorte, ladite paroi latérale de l'évaporateur est arrosée par le ruissellement du solvant le long de celle-ci. Le rendement du procédé se trouve alors augmenté.

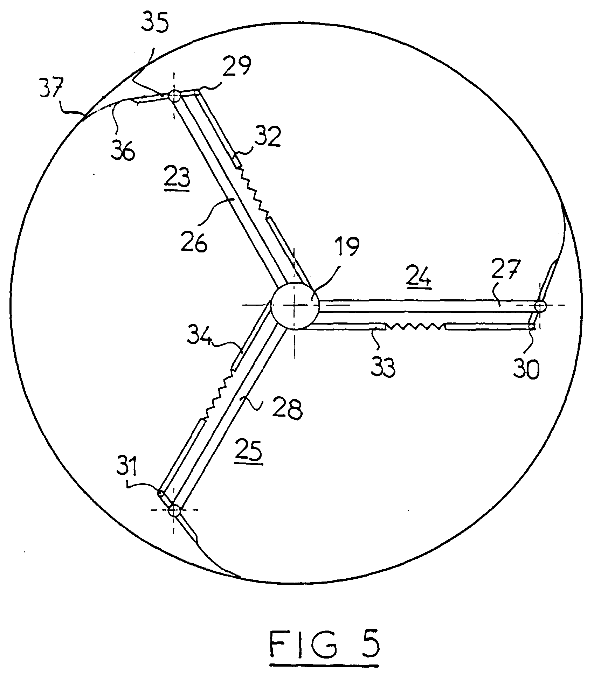

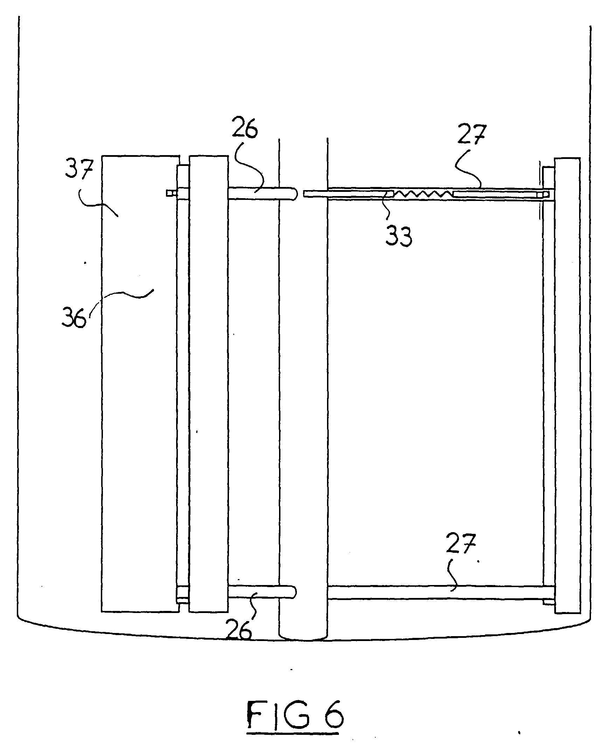

Au contact de la paroi latérale chaude de l'évaporateur, une partie du solvant polymérise, formant ainsi des particules solides adhérant à ladite paroi. L'organe de râclage, représenté sur la figure 5, permet de râcler ces particules solides pour les faire tomber au fond de l'évaporateur. Cet organe de râclage comprend un axe central rotatif (19), lequel est muni de pales (23,24,25) (voir figures 5,6) fixées sur l'axe rotatif central par l'intermédiaire d'une armature horizontale (26, 27, 28). L'extrémité de chacune des pales est reliée à l'axe rotatif (19) par l'intermédiaire d'un tendeur à vis réglable (32, 33, 34). Ce tendeur permet non seulement de régler la contrainte exercée par les pales contre la paroi latérale de l'évaporateur, mais également l'orientation desdites pales par rapport à ladite paroi. Chacune des pales est constituée d'un support (35) sur lequel est monté une lame en acier inox (36), dont l'extrémité venant au contact de la paroi de l'évaporateur est formée d'acier bleui (37). Le support (35) est articulé à l'extrémité (29,30,31) de l'armature horizontale (26,27,28). Sous l'effet de la pression exercée par le tendeur (32,33,34) au niveau du support (35), l'extrémité en acier bleui (37) rigide de la lame est plaquée par cintrage contre la paroi latérale de l'évaporateur, permettant un râclage efficace. On obtient, par ailleurs, un maximum de contact de la lame avec la paroi latérale de l'évaporateur, sans risque de blocage de la pale au cas où la paroi interne présente des aspérités.

Dans une forme non représentée, le système de retraitement selon l'invention est muni de hublots, ménagés sur le courvercle obturant l'évaporateur, permettant de visionner le déroulement des opérations.

Pour pallier l'apparition des phénomènes de moussage provoqués par l'ébullition du solvant, l'évacuation des vapeurs de solvant en direction du condenseur s'effectue par un coude, s'élevant d'abord à partir du couvercle l'obturant en hauteur avant d'amorcer le coude proprement dit.

Le procédé et l'installation selon l'invention permettent de fait d'optimiser les conditions de retraitement des solvants usagés, selon un rendement élevé, tout en s'affranchissant des risques de blocage de l'évaporateur, et en limitant la pollution tant chimique que thermique.

## Revendications

1. Procédé de retraitement de solvants usagés dans lequel :
- le solvant usagé est chauffé jusqu'à évoporation dans une enceinte,
- puis la vapeur ainsi dégagée, constituée par le solvant pur ou quasiment pur, est condensée et récupérée,
***caractérisé*** :
- en ce que le solvant usagé est filtré, le filtrat ainsi obtenu étant réintroduit dans ladite enceinte d'évaporation,
- et en ce que la paroi latérale de ladite enceinte subit un râclage permanent, afin de limiter et/ou d'annuler le dépôt de toute particule solide à ce niveau.

2. Procédé de retraitement de solvants usagés selon la revendication 1, ***caractérisé*** en ce que le filtrat est réintroduit dans la zone supérieure de l'enceinte d'évaporation, afin de permettre l'arrosage de la paroi latérale de ladite enceinte, de telle sorte à entraîner ainsi un ruissellement dudit filtrat le long de ladite paroi, pour créer un effet de couche mince.

3. Installation pour le retraitement de solvants usagés comprenant au moins un évaporateur (1, 2) destiné à recevoir d'une part le solvant usagé à retraiter, et d'autre part à élever ledit solvant en température jusqu'à aboutir à son évaporation, ledit évaporateur étant relié à une cuve d'alimentation en solvant usagé (3), et à un condenseur (10) au niveau duquel lesdites vapeurs, constituées du solvant pur ou quasiment pur, sont condensées pour être ensuite stockées, ***caractérisée*** :
- en ce que l'évaporateur (1, 2) est relié à au moins un filtre (7, 8), destiné à débarasser le solvant usagé de ses particules solides, le filtrat obtenu étant réintroduit dans l'évaporateur en boucle fermée ;
- et en ce que l'évaporateur comporte un organe de râclage rotatif en appui permanent contre la paroi latérale dudit évaporateur.

4. Installation pour le retraitement de solvants usagés selon la revendication 3, ***caractérisée*** en ce que ledit organe de râclage (15) est constitué d'un axe rotatif central (19), muni d'une pluralité de pales sensiblement radiales (23, 24, 25), l'extrémité libre desdites pales étant en contact avec la paroi latérale interne de l'évaporateur, l'orientation et la contrainte exercées par les pales au niveau de ladite paroi étant réglables.

5. Installation pour le retraitement de solvants usagés selon la revendication 4, ***caractérisée*** en ce que le râclage est effectué en traction ou en poussée.

6. Installation pour le retraitement de solvants usagés selon l'une des revendications 4 et 5, ***caractérisée*** en ce que le réglage de l'orientation des pâles et de la contrainte qu'elles exercent contre la paroi latérale de l'évaporateur est effectué par un tendeur à vis (32, 33, 34), dont l'une des extrémités est solidaire de l'arbre central rotatif (19).

7. Installation pour le retraitement de solvants usagés selon la revendication 6, ***caractérisée*** en ce que chacune des pales (23,24,25) est constituée d'un support (35) sur lequel est monté une lame en acier inox (36), dont l'extrémité venant au contact de la paroi de l'évaporateur est formée d'acier bleui (37), ledit support (35) étant articulée à l'extrémité d'une armature radiale (26, 27, 28) solidaire de l'axe rotatif (19).

8. Installation pour le retraitement de solvants usagés selon l'une des revendications 4 à 7, ***caractérisée*** en ce que la vitesse de rotation de l'évaporateur est comprise entre 5 et 100 tours/minute.

9. Installation pour le retraitement de solvants usagés selon l'une des revendications 4 à 8, ***caractérisée*** en ce que le filtrat est réintroduit dans la zone supérieure de l'évaporateur (1, 2) directement dans un réceptacle central (18) muni de goulottes radiales (20, 21, 22), dont l'extrémité libre est voisine de la paroi latérale de l'évaporateur, pour permettre l'arrosage de ladite paroi latérale, entraînant ainsi un ruissellement dudit filtrat le long de celle-ci, et créant un effet de couche mince.

10. Installation pour le retraitement de solvants usagés selon la revendication 9, ***caractérisée*** en ce que le receptacle central (18) muni de goulottes radiales (20, 21, 22) est fixé sur un axe rotatif central (19), entrainant ainsi un ruissellement uniforme du filtrat le long de la paroi latérale de l'évaporateur.
